# EUROPEAN PATENT APPLICATION

(11) **EP 4 687 325 A1**
(43) Date of publication of application: **04.02.2026**
(21) Application number: 24306285.8
(22) Date of filing: 30.07.2024
(51) Int. Cl.: H04L 9/40, H04L 9/32, H04L 67/12, H04W 12/10, H04W 12/106

(54) **REMOTE ATTESTATION OVER IN-VEHICLE NETWORK**

(71) Applicant: NXP B.V., 5656 AG Eindhoven (NL)
(72) Inventor: Poulard, Fabrice, 31023 Toulouse (FR); van Roermund, Timotheus Arthur, 31023 Toulouse (FR)
(74) Representative: Miles, John Richard

(57) **Abstract**

A method for remote attestation over in-vehicle network includes generating an authentication token in a first Hardware Security Module (HSM) of a first system, wherein the authentication token identifies a data content of a memory. A Run-Time Integrity Check using the authentication token in the first HSM is executed to determine a state of the memory of the first system. A key usage flag of a key is modified in response to the state of the memory. A Challenge-Response Protocol (CRP) is executed between a first Remote Attestation (RA) module of the first HSM and a second RA module of a second HSM of the second system, wherein the first RA module is responsive to the key usage flag. A security measure is executed in response to a failed CRP.

## Description

### FIELD

This disclosure relates generally to network security, and more specifically to remote attestation of interconnected systems in an in-vehicle network.

### BACKGROUND

Systems-of-systems, for example Vehicle Electrical/Electronic (E/E) Architecture (VEA), may use multiple systems that are interdependent. Interdependent systems may be found in many applications with either direct dependence between two systems or dependency through an intermediary system. For example, three systems A, B and C may be arranged such that A communicates with C through B. Thus the functionality of A and C depend on the integrity and correct functioning of B. In one example, B may be compromised by an adversary (e.g., a hacker) directly, through wireless links and the like. B may also be compromised from another system connected to B, other than A or C.

Interdependent systems may also be found in automotive applications including vehicle-centralized, zone-oriented E/E architectures, which replace domain-specific individual control units with fewer, more powerful, computers. While complexity may be reduced with these centralized computers, ensuring the integrity of each computer increases in importance.

### BRIEF DESCRIPTION OF THE DRAWINGS

The present invention is illustrated by way of example and is not limited by the accompanying figures, in which like references indicate similar elements. Elements in the figures are illustrated for simplicity and clarity and have not necessarily been drawn to scale.
FIG. 1 is a schematic view of a system for remote attestation over a VEA network showing an installation of a cryptographically protected application in a memory, in accordance with an embodiment of the present disclosure.
FIG. 2 is a schematic view of a system for remote attestation over a VEA network showing a Run-Time Integrity Check (RTIC), in accordance with an embodiment of the present disclosure.
FIG. 3 is a schematic view of a pair of systems for remote attestation over a VEA network showing an execution of a Challenge-Response Protocol (CRP), in accordance with an embodiment of the present disclosure.
FIG. 4 is a schematic view of a pair of systems for remote attestation over a VEA network showing a failed CRP, in accordance with an embodiment of the present disclosure.
FIG. 5 is a flowchart representation of a method for remote attestation over a VEA network, in accordance with an embodiment of the present disclosure.
FIG. 6 is another flowchart representation of a method for remote attestation over a VEA network, in accordance with an embodiment of the present disclosure.

### DETAILED DESCRIPTION

Embodiments described herein provide for remote attestation between at least two systems interconnected in an in-vehicle network. One system may be vulnerable to malicious interference or "hacking", which may affect the operation of a second system. Accordingly, the first system (e.g., an "attester") should ensure its integrity to the second system (e.g., a "verifier"). Specifically in one example, memory contents of the first system may be altered to place the first system under that control of an adversary. In the described embodiments of this disclosure, the integrity of the memory contents may be frequently checked from a secure enclave of the system that includes the memory by computing and comparing hashing or error codes of the memory contents or by observing unexpected changes to a system clock, a supply voltage range, a die temperature, voltage glitches and the like. A secure Remote Attestation Key (RAK) may be installed in the secure enclave of the attester system and have a key usage flag enabled or disabled depending upon the determined integrity of the memory contents. A CRP may be repeatedly executed between the verifier system and the attester system. When the key usage flag of the RAK is disabled, due to a failed integrity check of the memory, the RAK may cause the CRP to fail. In one embodiment, the secure enclave may generate a Message Authentication Code (MAC) code on request, over a challenge provided by the verifier. A disabled RAK will prevent the secure enclave from generating the MAC code, hence causing the CRP to fail. In another embodiment, the CRP may request a digital signature, an encrypted response, or other form of response, which may be similarly blocked by a disabled key usage flag. A failed CRP may be detected by the verifier system, which in turn may take measures to protect the systems relying upon the integrity of the attester system.

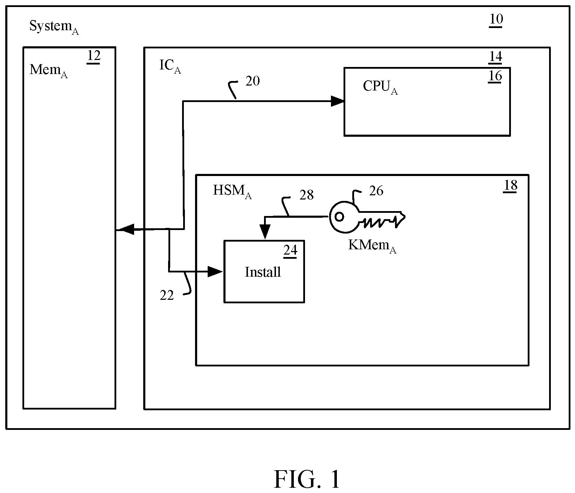

FIG. 1 shows a system 10 for remote attestation over a VEA network. In one embodiment, the system 10 may include a memory 12 and an integrated circuit (IC) 14. In another embodiment, the memory 12 may be part of the IC 14. The IC 14 may include a Central Processing Unit (CPU) 16 and a secure enclave. In one embodiment, the secure enclave may be a Hardware Security Module (HSM) 18. The CPU 16 may communicate with the memory 12 over a bus 20. The HSM 18 may communicate with the memory 12 over a bus 22. In one embodiment, program code, data or a combination of code and data may be stored in the memory 12, where the CPU 16 may execute using the stored contents of the memory 12. An install module 24 (e.g., a circuit, software or firmware) may create an authentication token for the memory upon installation of a program code, data or a combination of code and data. The authentication token is later on used by the RTIC to verify that the contents of the memory have not changed. In one embodiment, the authentication token may be a MAC that is created over the contents of the memory, using a key 26 as an input to the install module 24, connected over a net 28. In one embodiment, the key 26 may be transferred from its storage location (e.g. a "key slot") that is only accessible by the secure enclave 18. In one embodiment of FIG. 1, the install module 24 receives input from the memory 12 and proof of authenticity (not shown). In various embodiments, the proof of authenticity may be a signature that can be verified with a public key or a MAC that can be verified with a secret key. The proof of authenticity may be verified against the memory 12 with the key 26, where verification takes place inside the install module 24. After successful verification, the install module 24 may generate an authentication token. In various embodiments, the authentication token may be a cryptographic hash, a MAC or a token that is capable of verifying the contents of the memory 12, securely stored in the HSM 18.

In another embodiment, the memory may be divided into multiple regions, one for each application, (code, data or both code and data), which may each be protected separately. In another embodiment, each application and memory region may be attested using separate keys (e.g., RAKs),

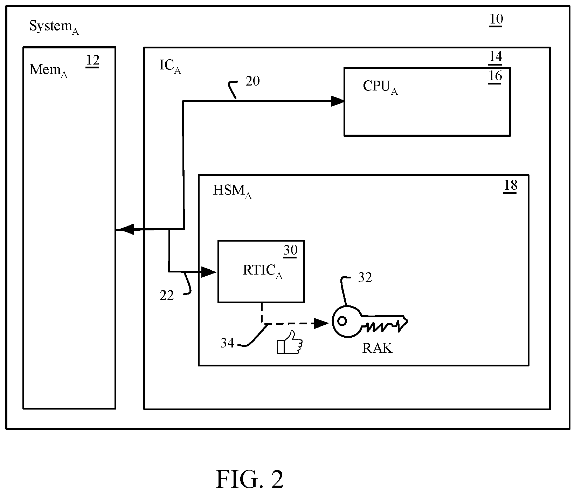

FIG. 2 shows the system 10 of FIG. 1 with an RTIC 30 connected to the installed key 32 (e.g., a RAK) over a net 34. In one embodiment, the HSM 18 may regularly check the contents of the memory 12 with the RTIC 30 to determine a state of the memory. If the state of the memory is valid, the contents of the memory will not have changed due to an adversarial attack. If the state is invalid, then the contents may have changed, hence may not be safe to access or execute. If the state is determined to be invalid, then the key usage flag of the RAK 32 may be disabled. In one embodiment, a limited address range of the memory 12 may be verified, where the CPU 16 is similarly limited in using the limited address range of the memory 12. In one embodiment, verification of the state of the memory may include creating a hash of the memory contents after the initial memory contents are written and subsequently before the RTIC 30 is executed.

If the contents of the memory 12 are modified by an adversary (e.g., by installing malware), the RAK 32 with a consequently disabled key usage flag may no longer be able to be used to answer challenges presented by a verifier system with a CRP. The verifier may then take safety measures to defend against the attack, such as taking fail-safe actions to ensure that the system 10 may not further damage the safety of a higher level system in which the system 10 is included. In so doing, the verifier system may be considered to act as a "secure watchdog" or to provide a "secure life signal."

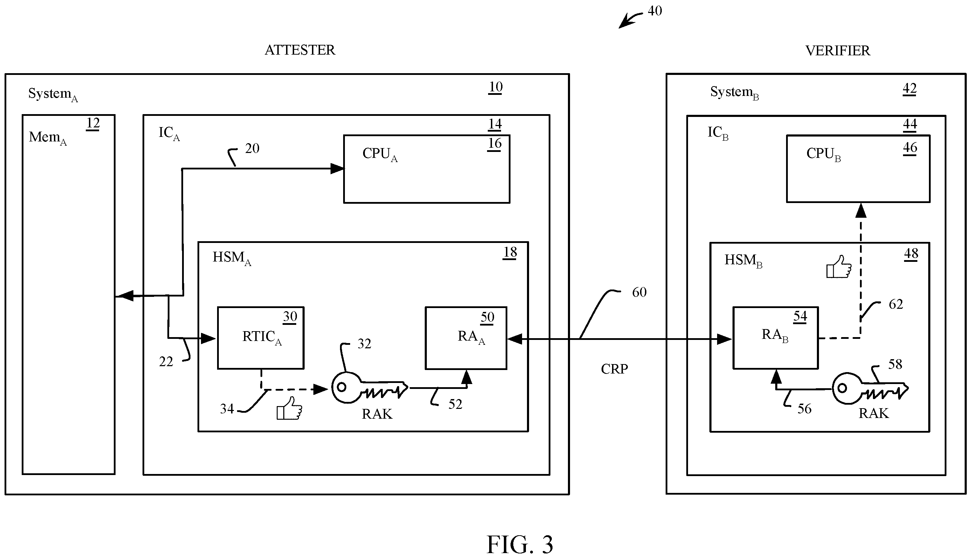

FIG. 3 shows an embodiment 40 of a pair of systems for remote attestation over a VEA network by executing a CRP. The embodiment 40 includes the system 10 of FIG. 2 as an "attester" in addition to a system 42 as a "verifier." Similar to the system 10, the system 42 includes an IC 44 with a CPU 46 and an HSM 48. In one embodiment, the HSM 48 is a secure enclave. In the embodiment 40, the HSM 18 of the system 10 includes a Remote Attestation (RA) module 50 is in communication with the RAK 32 over a net 52. The HSM 54 of the system 42 includes an RA module 54 communicating over a net 56 with an RAK 58. A CRP 60 may be run continuously between the RA module 50 and the RA module 54 to minimize the time during which the memory 12 may be compromised. As long as the RTIC 30 validates the integrity or authenticity of the memory contents, the CRP 60 will keep informing the CPU 46, connected to the RA module 54 by the net 62, that it is safe for the CPU 46 to rely upon the contents of the memory 12, and thus the correct functioning of the system 10.

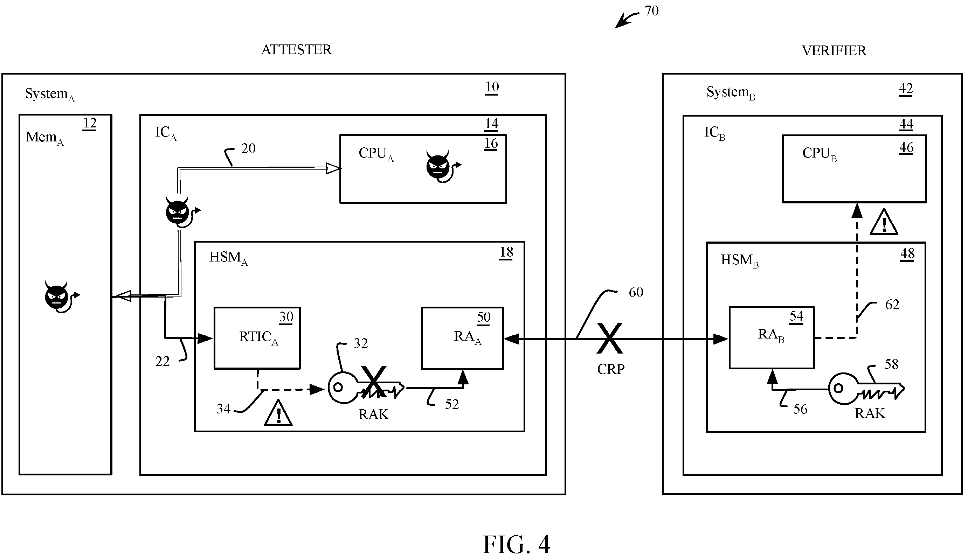

FIG. 4 shows an embodiment 70 of a pair of systems for remote attestation over a VEA network with a failed CRP. In contrast to FIG. 3, the embodiment 70 of FIG. 4 shows a failed CRP 60. In FIG. 3, malware or corrupt data may be introduced into the memory 12 by an adversary. The corruption of the contents of the memory 12 may then affect the CPU 16 and net 20. Subsequent to the corruption, the RTIC 30 may detect the change and disable the key usage flag of the RAK 32. The RA module 50 may then fail to properly respond to the CRP 60 (e.g., by not being able to generate a MAC code in response to the challenge from the CRP 60). The RA module 54 may detect the failed CRP 60 and instruct the CPU 46 to take safety measures. In another embodiment, the system 42 may switch to a "fail-operational mode", in which the functionality of the system 42 may be reduced, for example certain functions that ran on the system 10, upon which the system 42 relied, may be mapped to another system.

In other embodiments, the HSM 18 may invalidate the RAK 32 based on triggers from other sources, instead of, or in addition to, the detection of the corruption of the memory 12 by the RTIC 30. For example, the HSM 18 may include security sensors that monitor one or more of a clock frequency, a clock range, a supply voltage, a supply voltage range, a temperature (e.g. a temperature of the IC 10 substrate measured with a diode) or a glitch detection. Each of these security sensors may indicate intrusion into the system 10 by an adversary, as long as the sensor may be trusted and not modified by the adversary itself. Fail-safe mechanisms may be used to ensure the integrity of the sensor.

Additional verification may include ensuring that the CPU 16 uses the memory 12 being verified. The address range of the memory used by the CPU 16 may be validated. A Micro-Processor Unit (MPU) may be used to constrain the CPU 16 from using more memory than is checked by the RTIC 30 (or security sensors). The CPU 16 may also be linked to the HSM 18. The described embodiments in this disclosure prevent an adversary from controlling the applications, memory 12 and network interfaces of the system 10, without being detected by the system 42. Furthermore, the adversary may not manipulate the HSM 18 nor HSM 48 because the implementation may be hardened against attacks with multiple countermeasures to prevent manipulation, hence the CRP 60 is end-to-end protected. The system 42 may detect corruption of the memory 12 as well as traffic blocking (e.g., no response to a CRP 60), a manipulated response to the CRP 60 and a repeated response to the CRP 60. For example, the verifier (system 42) may include a "freshness value" in the CRP 60, which must be input to the calculation of the response by the system 42. In some embodiments, this freshness value may be a monotonic counter, a random nonce or a timestamp. Since the RAK 32 is protected within the HSM 18, the adversary may not calculate a correct response to the CRP 60. In one embodiment, the HSM 18 and HSM 48 are isolated and operate independently from an application context.

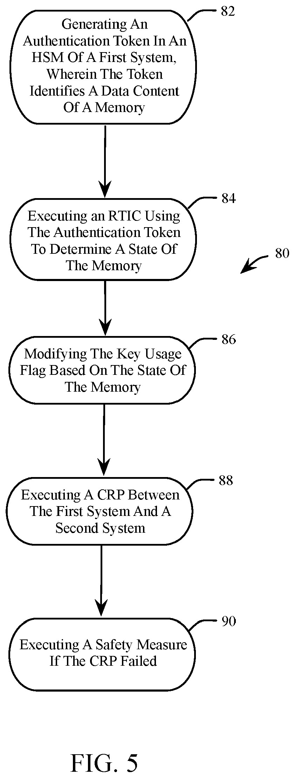

FIG. 5 shows an embodiment 80 of a method for remote attestation over in-vehicle network. With continued reference to FIG. 1, FIG. 3, FIG. 4 and FIG. 5, at 82 an authentication token may be generated from a key 26 of a first system 10. The authentication token may identify a data content of a memory. At 84, an RTIC 30 is executed to determine a state of a memory 12. At 86, The key usage flag of the RAK 32 is modified based on the state of the memory (e.g., the state is disabled if some of the memory contents are determined to be corrupted by an adversary). At 88, a CRP 60 is executed between the first system 10 and a second system 42. In one embodiment at 90, a security measure is executed in response to a failed CRP.

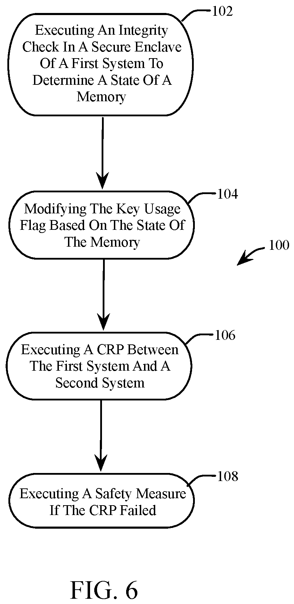

FIG. 6 shows an embodiment 100 of a method for remote attestation over in-vehicle network. With continued reference to FIG. 3, FIG. 4 and FIG. 6, at 102 an integrity check (e.g., an RTIC 30), is executed in a secure enclave (e.g., an HSM 18) of a first system 10 to determine a state of a memory 12. At 104, the key usage flag is modified based on the state of the memory 12. At 106, a CRP 60 is executed between the first system 10 and a second system 42. In one embodiment at 108, a safety measure is executed if the CRP 60 fails.

As will be appreciated, at least some of the embodiments as disclosed include at least the following. In one embodiment, a method for remote attestation over in-vehicle network comprises generating an authentication token in a first Hardware Security Module (HSM) of a first system, wherein the authentication token identifies a data content of a memory. A Run-Time Integrity Check (RTIC) using the authentication token in the first HSM is executed to determine a state of the memory of the first system. A key usage flag of a key is modified in response to the state of the memory. A Challenge-Response Protocol (CRP) is executed between a first Remote Attestation (RA) module of the first HSM and a second RA module of a second HSM of the second system, wherein the first RA module is responsive to the key usage flag. A security measure is executed in response to a failed CRP.

A method for remote attestation over in-vehicle network includes generating an authentication token in a first Hardware Security Module (HSM) of a first system, wherein the authentication token identifies a data content of a memory. A Run-Time Integrity Check using the authentication token in the first HSM is executed to determine a state of the memory of the first system. A key usage flag of a key is modified in response to the state of the memory. A Challenge-Response Protocol (CRP) is executed between a first Remote Attestation (RA) module of the first HSM and a second RA module of a second HSM of the second system, wherein the first RA module is responsive to the key usage flag. A security measure is executed in response to a failed CRP.

Alternative embodiments of the method for remote attestation over in-vehicle network include one of the following features, or any combination thereof. A change to the state of the memory indicates a data content change of the memory. The RTIC checks the data content of a full address range of the memory. The RTIC checks the data content of a limited address range of the memory, and a Central Processing Unit of the first system is restricted to accessing the limited address range. The first HSM receives an instruction from a Central Processing Unit of the first system.

In another embodiment, an apparatus comprises a first system comprising a first secure enclave and a memory, the first secure enclave comprising an authentication token and a Run-Time Integrity Check (RTIC) configured to determine a state of the memory of the first system, wherein the key usage flag is responsive to the state of the memory. A second system comprises a second secure enclave configured to execute a Challenge-Response Protocol (CRP) between a first Remote Attestation (RA) module of the first secure enclave and a second RA module of the second secure enclave, wherein the first RA module is responsive to the key usage flag.

Alternative embodiments of the apparatus include one of the following features, or any combination thereof. The first secure enclave comprises a first Hardware Security Module (HSM). The second system comprises a Central Processing Unit (CPU), wherein the second RA module is configured to disable at least access to an address range of the memory of the first system by the CPU of the second system in response to a failed CRP execution. The first system further comprises a Central Processing Unit (CPU) connected to the memory and to the first secure enclave, wherein the first secure enclave is configured to receive an instruction from the CPU. The RTIC determines the state of the memory from the authentication token and a current data stored in the memory.

In another embodiment, a method for remote attestation over in-vehicle network comprises executing an integrity check in a first secure enclave of a first system to determine a state of a memory, wherein the first secure enclave comprises an authentication token and wherein the state of the memory indicates a change in a data stored in the memory. A key usage flag of a key is modified in response to the state of the memory. A Challenge-Response Protocol (CRP) is executed between the first secure enclave and a second secure enclave of a second system, wherein the first secure enclave is responsive to the key usage flag. A security measure is executed in response to a failed CRP.

Alternative embodiments of the method for remote attestation over in-vehicle network include one of the following features, or any combination thereof. Executing the integrity check comprises executing a Run-Time Integrity Check (RTIC). An authentication token is created in the first secure enclave from the key prior to executing the integrity check. Executing the safety measure comprises disabling access to an address range of the memory. The integrity check determines the state of a full address range of the memory. The integrity check determines the state of at least one limited address range of the memory and a Central Processing Unit of the first system is restricted to accessing the at least one limited address range. Executing the integrity check comprises monitoring a clock frequency range. Executing the integrity check comprises monitoring a supply voltage range. Executing the integrity check comprises monitoring a temperature. Executing the integrity check comprises detecting a voltage glitch.

Although the invention is described herein with reference to specific embodiments, various modifications and changes can be made without departing from the scope of the present invention as set forth in the claims below. Accordingly, the specification and figures are to be regarded in an illustrative rather than a restrictive sense, and all such modifications are intended to be included within the scope of the present invention. Any benefits, advantages, or solutions to problems that are described herein with regard to specific embodiments are not intended to be construed as a critical, required, or essential feature or element of any or all the claims.

Unless stated otherwise, terms such as "first" and "second" are used to arbitrarily distinguish between the elements such terms describe. Thus, these terms are not necessarily intended to indicate temporal or other prioritization of such elements.

## Claims

1. A method for remote attestation over in-vehicle network comprising:
generating an authentication token in a first Hardware Security Module (HSM) of a first system, wherein the authentication token identifies a data content of a memory;
executing a Run-Time Integrity Check (RTIC) using the authentication token in the first HSM to determine a state of the memory of the first system;
modifying a key usage flag of a key in response to the state of the memory;
executing a Challenge-Response Protocol (CRP) between a first Remote Attestation (RA) of the first HSM and a second RA module of a second HSM of the second system, wherein the first RA module is responsive to the key usage flag; and
executing a security measure in response to a failed CRP.

2. The method of claim 1 wherein a change to the state of the memory indicates a data content change of the memory.

3. The method of claim 1 wherein the RTIC checks the data content of a full address range of the memory.

4. The method of claim 1 wherein the RTIC checks the data content of a limited address range of the memory, and a Central Processing Unit of the first system is restricted to accessing the limited address range.

5. The method of claim 1 wherein the first HSM receives an instruction from a Central Processing Unit of the first system.

6. An apparatus comprising:
a first system comprising a first secure enclave and a memory, the first secure enclave comprising an authentication token and a Run-Time Integrity Check (RTIC) configured to determine a state of the memory of the first system, wherein the key usage flag is responsive to the state of the memory; and
a second system comprising a second secure enclave configured to execute a Challenge-Response Protocol (CRP) between a first Remote Attestation (RA) module of the first secure enclave and a second RA module of the second secure enclave, wherein the first RA module is responsive to the key usage flag.

7. The apparatus of claim 6 wherein the first secure enclave comprises a first Hardware Security Module (HSM).

8. The apparatus of claim 6 or 7, wherein the second system further comprises a Central Processing Unit (CPU), wherein the second RA module is configured to disable at least access to an address range of the memory of the first system by the CPU of the second system in response to a failed CRP execution.

9. The apparatus of any of claims 6 to 8 wherein the first system further comprises a Central Processing Unit (CPU) connected to the memory and to the first secure enclave, wherein the first secure enclave is configured to receive an instruction from the CPU.

10. The apparatus of any of claims 6 to 9, wherein the RTIC determines the state of the memory from the authentication token and a current data stored in the memory.

11. A method for remote attestation over in-vehicle network comprising:
executing an integrity check in a first secure enclave of a first system to determine a state of a memory, wherein the first secure enclave comprises an authentication token and wherein the state of the memory indicates a change in a data stored in the memory;
modifying a key usage flag of a key in response to the state of the memory;
executing a Challenge-Response Protocol (CRP) between the first secure enclave and a second secure enclave of a second system, wherein the first secure enclave is responsive to the key usage flag; and
executing a security measure in response to a failed CRP.

12. The method of claim 11 wherein executing the integrity check comprises executing a Run-Time Integrity Check (RTIC).

13. The method of claim 11 or 12 further comprising creating an authentication token in the first secure enclave from the key prior to executing the integrity check.

14. The method of any of claims 11 to 13 wherein executing the safety measure comprises disabling access to an address range of the memory.

15. The method of any of claims 11 to 14, wherein the integrity check determines the state of a full address range of the memory.

## Amended claims

### Amended claims in accordance with Rule 137(2) EPC.

1. A method (80) for remote attestation over in-vehicle network comprising:
generating (82) an authentication token in a first Hardware Security Module, HSM (18), of a first system (10), wherein the authentication token identifies a data content of a memory (12) of the first system (10);
executing (84) a Run-Time Integrity Check, RTIC (30), using the authentication token in the first HSM (10) to determine a state of the memory (12) of the first system (10);
modifying (86) a key usage flag of a key in response to the state of the memory; **characterized by**
executing (88) a Challenge-Response Protocol, CRP (60), between a first Remote Attestation, RA, module (50) of the first HSM (10) and a second RA module (54) of a second HSM (48) of a second system (42), wherein the first RA module (50) is responsive to the key usage flag; and
executing (90) by the second system (42) a security measure in response to a failed CRP (60) by mapping functions running on the first system (10) upon which the second system (42) relies to another system.

2. The method (80) of claim 1 wherein a change to the state of the memory (12) indicates a data content change of the memory (12).

3. The method (80) of claim 1 wherein the RTIC (30) checks the data content of a full address range of the memory (12).

4. The method (80) of claim 1 wherein the RTIC (30) checks the data content of a limited address range of the memory (12), and a Central Processing Unit (16) of the first system (10) is restricted to accessing the limited address range.

5. The method (80) of claim 1 wherein the first HSM (18) receives an instruction from a Central Processing Unit (16) of the first system (10).

6. An apparatus (40) comprising:
a first system (10) comprising a first secure enclave (18) and a memory (12), the first secure enclave (10) comprising an authentication token and a Run-Time Integrity Check, RTIC (30), configured to determine a state of the memory (12) of the first system (10), wherein the key usage flag is responsive to the state of the memory (12); and **characterized by**
a second system (42) comprising a second secure enclave (48) configured to execute a Challenge-Response Protocol, CRP (60), between a first Remote Attestation, RA, module (50) of the first secure enclave (18) and a second RA module (54) of the second secure enclave (48), wherein the first RA module (50) is responsive to the key usage flag,
wherein the second system (42) is configured to execute a security measure in response to a failed CRP (60) by mapping functions running on the first system (10) upon which the second system (42) relies, to another system.

7. The apparatus (40) of claim 6 wherein the first secure enclave (18) comprises a first Hardware Security Module, HSM.

8. The apparatus (40) of claim 6 or 7, wherein the second system (42) further comprises a Central Processing Unit, CPU (46), wherein the second RA module (54) is configured to disable at least access to an address range of the memory (12) of the first system (10) by the CPU (46) of the second system (42) in response to a failed CRP execution.

9. The apparatus (40) of any of claims 6 to 8 wherein the first system (10) further comprises a Central Processing Unit, CPU (16), connected to the memory (12) and to the first secure enclave (18), wherein the first secure enclave (18) is configured to receive an instruction from the CPU (16).

10. The apparatus (40) of any of claims 6 to 9, wherein the RTIC (30) determines the state of the memory (12) from the authentication token and a current data stored in the memory (12).

11. A method (100) for remote attestation over in-vehicle network comprising:
executing (102) an integrity check in a first secure enclave (18) of a first system (10) to determine a state of a memory (12), wherein the first secure enclave (18) comprises an authentication token and wherein the state of the memory (12) indicates a change in a data stored in the memory (12);
modifying (104) a key usage flag of a key in response to the state of the memory (12); **characterized by**
executing (106) a Challenge-Response Protocol, CRP (60), between the first secure enclave (18) and a second secure enclave (48) of a second system (42), wherein the first secure enclave (18) is responsive to the key usage flag; and
executing (108) by the second system (42) a security measure in response to a failed CRP by mapping functions running on the first system (10) upon which the second system (42) relies, to another system.

12. The method (100) of claim 11 wherein executing (102) the integrity check comprises executing a Run-Time Integrity Check, RTIC (30).

13. The method (100) of claim 11 or 12 further comprising creating an authentication token in the first secure enclave (18) from the key prior to executing the integrity check.

14. The method (100) of any of claims 11 to 13 wherein executing the safety measure comprises disabling access to an address range of the memory (12).

15. The method (100) of any of claims 11 to 14, wherein the integrity check determines the state of a full address range of the memory (12).
